# EUROPEAN PATENT APPLICATION

(11) **EP 1 659 817 A2**
(43) Date of publication of application: **24.05.2006**
(21) Application number: 05025158.6
(22) Date of filing: 17.11.2005
(51) Int. Cl.: H04Q 7/38, H04B 1/38

(54) **Method for automatically originating international call and mobile communication terminal using the same**

(30) Priority: 17.11.2004 KR 2004093858
(71) Applicant: Samsung Electronics Co., Ltd., Suwon-si, Gyeonggi-Do (KR)
(72) Inventor: Jin, Jeong-Gyu, Yeongtong-gu Suwon-si Gyeonggi-do (KR); Kim, Young-Wan, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed are a method for automatically originating an international call and a mobile communication terminal using the same, such that a function of automatically originating an intemational call according to movement of a mobile communication terminal between countries is provided. The mobile communication terminal includes a country code detecting unit for informing a country code for a corresponding country by detecting movement of a mobile communication terminal between countries. If the country code detecting unit provides an allowable country code according to the position of the mobile communication terminal, a control unit adds an intemational dialing code to preset information regarding a call terminating side so as to enable call connection. When the user registers a phone number of a communication counterpart in a phone directory, the user previously registers a country code for a country (in which the counterpart is located) and an area code in addition to the phone number of the counterpart as the information regarding the call terminating side. Accordingly, the user can call the counterpart positioned in another country without additionally inputting an international dialing code and a country code whenever the user originates a call.

## Description

The present invention relates to a method for originating a call to an international telephone number in a mobile communication terminal, and more particularly to a method in which the international telephone number is automatically detected according to information regarding the position of the mobile communication terminal when a call is originated, thereby enabling call origination without additional input of a country code.

Conventionally, if a user utilizing a mobile communication terminal preliminarily inputs an area code (to be used as an automatic area code) into the mobile communication terminal in order to use an automatic area code function, the automatic area code function may be set up. For example, if an automatic area code function having an area code '02' for Seoul, Korea input as an automatic area code is set up, the preliminarily input area code '02' may be displayed as a waiting image of a screen in the mobile communication terminal. Accordingly, when the user originates a call, it is enough for the user to input only the phone number of the counterpart of the user without additionally inputting the area code '02'. However, since this scheme allows the setting of only one automatic area code, the user is allowed to use only one fixed area code. Accordingly, in the conventional method, when the user originates a call to another counterpart in another area code, the user must delete an automatic area code displayed as the waiting image and then must input a corresponding area code again.

As described above, if a location in which a user utilizes a mobile communication terminal changes, the user must reset an automatic area code corresponding to the changed location. Similarly, the above-described problems may occur when an international call is originated.

When a user originates an international call by means of the conventional mobile communication terminal, the user originates a call by inputting an international dialing code provided by a service provider (e.g., the '001' service provider for Korea), a country code, an area code, and a phone number of a communication counterpart of the user.

However, when a user utilizing a mobile communication terminal moves between countries and not areas (for example, when a user goes on a business trip abroad), the user cannot input the phone number of the counterpart until the user additionally inputs an international dialing code provided by a service provider in order to perform a Roaming service and a country code corresponding to a country in which the counterpart is located.

As described above, if a country where a user utilizes a mobile communication terminal changes, the user must reset a corresponding country code. For example, when the user travels to the U.S. on a business trip and intends to make a call to Korea, the user inputs an international dialing code provided by a service provider in the U.S. and then must input all corresponding numbers in the order of a country code (for Korea), an area code, and a phone number. In addition, if the user utilizing the mobile communication terminal travels to another country, the user must set a corresponding international dialing code again, even when an international dialing code is preset. In particular, when the user intends to originate a call in other countries than the countries corresponding to preset international dialing codes, the user must additionally input the corresponding country code. Therefore, when the user does not have previous knowledge of a corresponding country code, a time delay can occur because the user must search for the country code.

Accordingly, the present invention has been made to solve the above-mentioned problems occurring in the prior art.

It is the object of the present invention to provide a method for originating a call to an international telephone number in a mobile communication terminal, in which, when the mobile communication terminal moves between countries, the movement is detected, and the international telephone number is automatically detected according to information regarding the position of the mobile communication terminal during call origination, thereby enabling the call origination without additional input of a country code and an international dialing code.

This object is solved by the subject matter of the independent claims.

Preferred embodiments are defined in the dependent claims.

To accomplish the above, there is provided a mobile communication terminal capable of automatically originating an international call, the mobile communication terminal including a country code detecting unit for detecting a country code according to position information when the mobile communication terminal moves between countries, a memory for storing information regarding a call terminating side and a country code of each individual number input in phone directory registration, and a control unit for determining if there is position information provided according to movement of the mobile communication terminal between countries when a user requests call origination and adding the country code provided from the country code detecting unit to information regarding a call terminating side input in the call origination request, thereby performing call connection.

According to another aspect of the present invention, there is provided a method for automatically originating an international call in a mobile communication terminal, the method including the steps of, when position of the mobile communication terminal changes, receiving information regarding the position and detecting information regarding a current position of the mobile communication terminal, extracting a previously stored code for a corresponding country according to the detected information, receiving data from a user when call origination is requested, and performing call connection by adding the extracted code to the data.

The present invention will be more apparent from the following detailed description taken in conjunction with the accompanying drawings, in which:
FIG. 1 is a schematic block diagram illustrating an internal structure of a mobile communication terminal performing a function of automatically originating an international call based on the movement of the mobile communication terminal between countries according to an embodiment of the present invention;
FIG. 2 is a view illustrating a scheme for storing phone numbers of communication counterparts in a memory of a mobile communication terminal according to an embodiment of the present invention;
FIG. 3 is a flowchart illustrating a procedure of automatically setting an international telephone number and performing call connection according to an embodiment of the present invention; and
FIG. 4 illustrates an example of an image in which a call is automatically originated without inputting an international telephone number according to an embodiment of the present invention.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear.

The present invention is realized in such a manner that a function of automatically originating an international call according to the movement of a mobile communication terminal between countries is provided. To this end, the present invention includes a country code detecting unit for informing a country code for a corresponding country by detecting the movement of a mobile communication terminal between countries. If the country code detecting unit provides an allowable country code according to the position of the mobile communication terminal, a control unit adds an international dialing code to preset information regarding a call terminating side so as to enable call connection. Herein, when the user registers a phone number of a communication counterpart in a phone directory, the user must previously register a country code for a country (in which the counterpart is located) and an area code in addition to the phone number of the counterpart as the information regarding the call terminating side.

Accordingly, the user can call the counterpart located in another country without additionally inputting an international dialing code and a country code whenever the user originates a call.

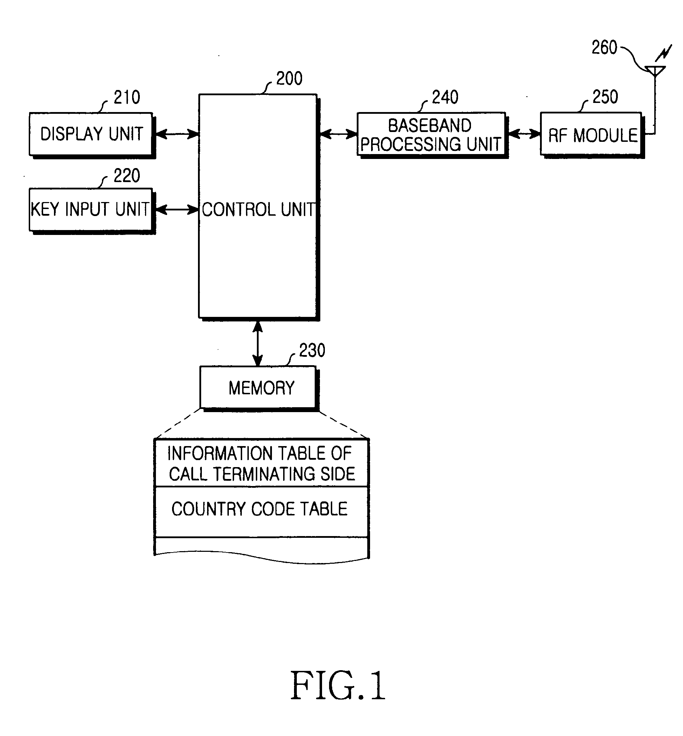

Hereinafter, a function of automatically originating an international call realized in a mobile communication terminal according to an embodiment of the present invention will be described with reference to FIG. 1. FIG. 1 is a schematic block diagram illustrating an internal structure of the mobile communication terminal performing the function of automatically originating an international call based on the movement of the mobile communication terminal between countries.

A control unit 200 performs the overall control operation of the mobile communication terminal including wireless communication and data processing for the mobile communication terminal. As described below, the control unit 200 also receives a country code detected by a country code detecting unit (not shown) according to movement of the mobile communication terminal between countries and adds an international call identification number to preset information regarding a call terminating side, thereby enabling call connection.

The control unit 200 receives information regarding an international telephone number from a GPS satellite or a base station (e.g., information about country position) according to the movement of the mobile communication terminal between countries and updates a memory 230 using the received information. Accordingly, the control unit 200 automatically recognizes a country code of a corresponding country regardless of a country in which the counterpart is located and automatically adds an international call identification number to the preset information regarding a call terminating side, thereby enabling call origination. Herein, the preset information includes a country code, an area code, and a corresponding phone number.

In addition, if the user inputs a phone number used for originating a call according to the present invention, the control unit 200 detects a preset country code corresponding to the phone number of a call terminating side registered in a phone directory and adds an international dialing code and the detected country code to the input phone number, thereby enabling call connection.

In addition, if the user presses a short-cut key used for originating a call according to another embodiment of the present invention, and the control unit 200 detects that a communication counterpart is in a country different from a country where the user is, the control unit 200 adds an international call identification number according to the location of the user to the information regarding the call terminating side stored in the memory 230 corresponding to the short-cut key, thereby enabling call connection for automatically originating an international call.

As described above, when the user calls a communication counterpart in another country according to the present invention, the control unit 200 automatically adds an international call identification number to the phone number of the call terminating side without additionally inputting an international dialing code and a country code, thereby automatically originating an international call.

In addition, a display unit 210 displays display data corresponding to key input data input from a key input unit 220 or displays an operation state and several pieces of information regarding the mobile communication terminal as icons and characters under the control of the control unit 200. In addition, when a function desired by a user is set or operated, the display unit 210 enables visual display with respect to the set state or the operation state under the control of the control unit 200. In particular, when the user inputs a phone number according to one embodiment of the present invention, the display unit 210 displays the phone number. In addition, when a call is originated, the display unit displays an international call identification number together with the received phone number.

The key input unit 220 has various types of keys including numeric keys and provides the control unit 200 with key input data input by the user. In other words, the key input unit 220 outputs original key input data according to input of the keys. The key input data output from the key input unit 220 are applied to the control unit 200. The control unit 200 detects the type a key corresponding to the key input data and performs a corresponding operation according to the detection result. In addition, the key input unit 220 serves as a medium through which the user can directly input the phone number or which transfers user's indication (such as selection of a desired phone number through input of a short-cut key) to the control unit 200 according to one embodiment of the present invention.

A memory unit 230 connected to the control unit 200 includes a read only memory (ROM), a random access memory (RAM), and a voice memory for storing a plurality of programs and several pieces of information required when operation of the mobile communication terminal is controlled. In addition, in the memory 230, information regarding the position of the mobile communication terminal received from a GPS satellite or a base station is periodically updated and stored according to one embodiment of the present invention.

In particular, the memory 230 stores a program for detecting an international call identification number, and an international dialing code table as a database used for calculating information regarding the position of the mobile communication terminal so as to find a country code and a program for the international dialing code table. Herein, the international dialing code table is previously filled by the user, has international dialing codes stored according to countries when the user receives a Roaming service in foreign countries, and is stored in a predetermined memory block. In another case, when the user originates a call without inputting a corresponding international dialing code according to the agreement between service providers of each country, the user may originate a call by inputting remaining numbers.

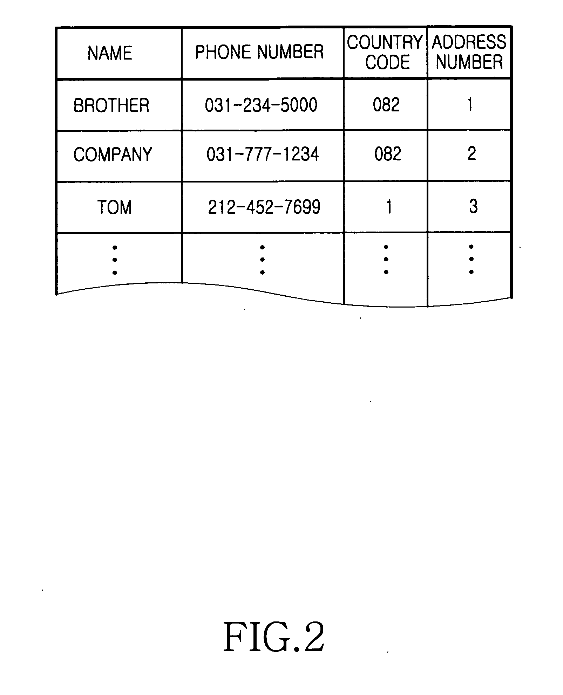

In addition, a table having information regarding a call termination side is realized in the memory 230 and is shown in FIG 2. As shown in FIG. 2, the table having information regarding a call termination side includes fields corresponding to a name, a phone number, and a country code of each counterpart and a field in which a number representing an address for distinguishing information regarding each counterpart is input, which are used when the user registers phone numbers according to communication counterparts in a phone directory. If the number is set as shown in FIG. 2, the user may automatically originate a call in a foreign country even if the user inputs only a short-cut key corresponding to the number.

Since it is quite probable that most persons of the table in the phone directory stored in the memory 230 belong to a country identical to that of the user utilizing the mobile communication terminal, a country code corresponding to the user is set as a default value. For example, when the user utilizing the mobile communication terminal is a Korean, a country code of '82' is set as a default value. Differently from this, as shown in FIG 2, when the user intends to register information regarding 'Tom' (who is an American friend of the user) in the table, the user inputs a country code of '1' as a country code of the U.S. in the table. As another example, the table may be constructed in such a manner that a country code of the U.S. is input as a default value, and a country code of '1' corresponding to the U.S. to be input is detected from a portion of a memory when the user originates a call.

As described above, the memory 230 stores a predetermined program for information regarding an automatic international telephone number set by the control unit 200 and for realizing a variety of fundamental functions for user convenience.

In addition, an RF module 250 transmitting/receiving an RF signal to/from a base station through an antenna (ANT) converts the received RF signal into an intermediate frequency (IF) signal to be output to a baseband processing unit 240. The RF module 250 converts an IF signal input from the baseband processing unit 240 into an RF signal to be transmitted. Herein, the baseband processing unit 240 refers to a baseband analog ASIC (BAA) providing an interface between the control unit 200 and the RF module 250. The baseband processing unit 240 converts a baseband digital signal received from the control unit 200 into an analog IF signal to be applied to the RF module 250 and converts an analog IF signal received from the RF module 250 into a baseband digital signal to be applied to the control unit 200.

A GPS signal receiving unit 260 embedded in the mobile communication terminal receives a GPS signal from a GPS satellite through the ANT, so as to detect the movement of the mobile communication terminal between countries and instantaneously find the location of the mobile communication terminal. In other words, the mobile communication terminal receives GPS position information transmitted from the GPS satellite by means of the GPS signal receiving unit 260 embedded therein.

The detection of the position information described above is achieved through a variety of schemes. Hereinafter, an embodiment for determining a current position of the mobile communication terminal (i.e., a country in which the mobile communication terminal is located) through a scheme of mounting the global positioning system (GPS) receiver on the mobile communication terminal or a scheme of receiving a service of determining the position of the mobile communication terminal from a mobile communication terminal system including a base station will be described according to the present invention.

The mobile communication terminal according to the present invention may include a country code detecting unit (not shown) for receiving position information by making communication with a base station through a radio circuit unit including baseband processing unit 240 and RF module 250, reading out a corresponding country code from the memory 230 by detecting the movement of the mobile communication terminal between countries based on the position information, and providing the corresponding country code to the control unit 200.

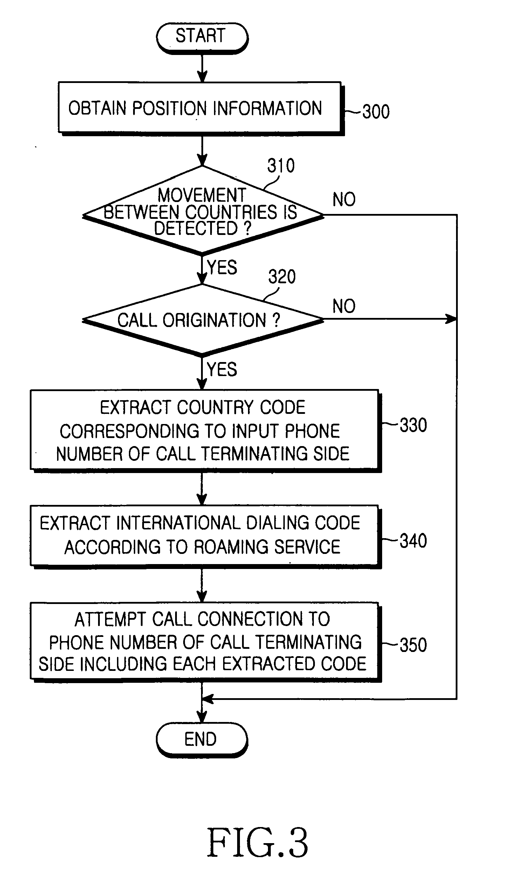

Hereinafter, a flowchart illustrating a procedure of automatically setting an international call identification number and originating a call will be described with reference to FIG 3.

In step 300, the control unit 200 obtains position information regarding a current position of the mobile communication terminal from a GPS satellite or a base station in a corresponding area in order to detect the movement of the mobile communication terminal between countries. If the position of the mobile communication terminal changes, the control unit 200 recognizes the current position of the mobile communication terminal by receiving information regarding the current position thereof from the base station or the GPS satellite. Accordingly, in step 310, the control unit 200 determines if movement of the mobile communication terminal between countries is detected based on the obtained position information.

If the change of the position of the mobile communication terminal refers to movement of the mobile communication terminal between countries, that is, if movement of the mobile communication terminal between countries is detected, the control unit 200 determines a corresponding country by using a database stored in the memory 230. In step 320, in order to determine if call origination is requested by the user, the control unit 200 determines if a user inputs a phone number of a call terminating side and presses a call connection key used for call origination. In other words, the control unit 200 determines if a call is originated.

If it is determined that the key for the call connection is pressed, the control unit 200 extracts a country code corresponding to the input phone number of the call terminating side in step 330. Thereafter, in step 340, the control unit 200 extracts an international dialing code based on position information regarding a country in which the mobile communication terminal is currently located. In step 350, the control unit 200 adds an international call identification number (including a country code and an international dialing code corresponding to the phone number of a call terminating side) to the phone number input when a call is originated, thereby automatically attempting call connection for an international call.

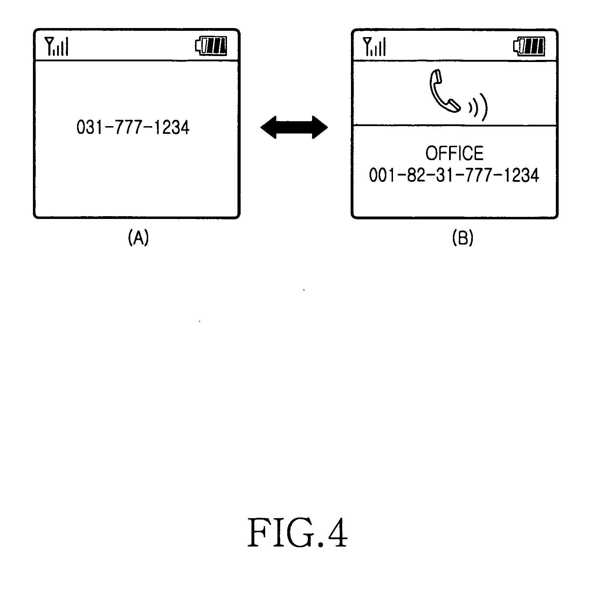

If the user inputs a phone number of a call terminating side as described above, an image shown in FIG 4(A) is displayed on the display unit 210 of the mobile communication terminal. If a key for call connection is pressed in a state in which the phone number of the call terminating side is displayed as described above, call connection to the new phone number is achieved while an image showing a new phone number obtained by adding the input phone number to the international call identification number (extracted through the steps described above) is being displayed as shown in FIG. 4(B). For example, if a key for call connection is input in a state in which a phone number of '031-777-1234' is input as a phone number of a call terminating side as shown in FIG. 4(A), an international call identification number extracted through the steps described above (i.e., numbers including an international dialing code of '001' and a country code of '82') is added to the input phone number of the call terminating side, thereby originating a call as shown in FIG4(B).

In the above description, according to one embodiment of the present invention, if a user manually inputs a phone number of a call terminating side and then presses a key for call connection in order to call a communication counterpart of the user in another country, an international call identification number corresponding to a country in which the user is located is extracted, and the extracted international call identification number is added to the input phone number, thereby enabling communication with the counterpart by using the added new phone number.

In the meantime, according to another embodiment of the present invention, when a user inputs a short-cut key used for originating a call and it is detected that a communication counterpart of the user is located in a country different from a country where the user is, an international call identification number according to the location of the user is added to information regarding the call terminating side stored in the memory 230 corresponding to the short-cut key, thereby enabling call connection for automatically originating an international call.

Hereinafter, in order to further explain the above, a case in which, a Korean user utilizing a mobile communication terminal having a country code of '82' set as a default value, travels to the U.S. on a business trip makes an international call to a younger brother in Korea will be described by way of example.

The control unit 200 detects information regarding the position of the mobile communication terminal received from a GPS satellite or a mobile communication system and then extracts an international dialing code to be used in Roaming previously input by the user through the scheme according to the present invention. Then, the control unit 200 extracts a country code '82' from information regarding a call terminating side stored in a phone directory and adds the extracted international dialing code and the extracted country code to a phone number of the younger brother, '031-234-5000', thereby performing call connection.

Accordingly, as shown in FIG 2, if a phone number of the younger brother is '031-234-5000', and a default country code for the phone number is '82', and if the user in the U.S. inputs '031-234-5000' in order to call the younger brother and then presses a key for call connection, an international dialing code of '001' provided by a service provider and a country code of '82' are automatically extracted, thereby originating an international call in the form of '001' + '82' + '031-234-5000'. In fact, it is preferred that the control unit 200 detects the origination of an international call and extracts an international dialing code and a country code and a corresponding number, thereby finally originating a phone number of '001' + '82' + '031-234-5000'.

In another example, if the user in the U.S. presses a short-cut key (i.e. '1' assigned for the younger brother) for a long time in order to a call the younger brother having a short-cut address number of '1' ,as shown in FIG. 2, an international dialing code of '001' to be used in Roaming (extracted based on position information from a GPS satellite or a mobile communication system) is added to a phone number of the younger brother including a country code of '82', thereby originating an international call in the form of '001' + '82-031-234-5000'.

As described above, according to the present invention, a mobile communication terminal receives position information (used for informing it of a country where it is positioned) from a GPS satellite or a base station to which it belongs, extracts a country code according to the position information, and previously stores a country code of each individual in a phone directory, so that a user utilizing the mobile communication terminal can automatically originate an international call regardless of countries even when the user does not manually set an international call identification number.

While the invention has been shown and described with reference to certain preferred embodiments thereof, it will be understood by those skilled in the art that various changes in form and details may be made therein without departing from the scope of the invention. Consequently, the scope of the invention should not be limited to the embodiments, but should be defined by the appended claims and equivalents thereof.

## Claims

1. A mobile communication terminal capable of automatically originating an international call, the mobile communication terminal comprising:
a country code detecting unit for detecting a country code according to position information when the mobile communication terminal moves between countries;
a memory for storing information regarding a call terminating side of each individual and a country code of each individual input in phone directory registration; and
a control unit for determining if there is position information provided according to movement of the mobile communication terminal between countries when a user requests call origination, and for adding the country code provided from the country code detecting unit to information regarding a call terminating side input in the call origination request, thereby performing call connection.

2. The mobile communication terminal as claimed in claim 1, further comprising a GPS signal receiving unit for providing GPS position information regarding the mobile communication terminal such that the movement of the mobile communication terminal between countries can be detected when position of the mobile communication terminal changes.

3. The mobile communication terminal as claimed in claim 1 or 2, further comprising a radio circuit unit for receiving the information regarding the position of the mobile communication terminal through communication with a base station.

4. The mobile communication terminal as claimed in one of claims 1 to 3, wherein the information regarding the call terminating side includes a country code, a phone number, and a name of each individual when the phone number of each individual is registered in a phone directory.

5. The mobile communication terminal as claimed in one of claims 1 to 4, further comprising a display unit for displaying a phone number input by the user and displaying an image including an international call identification number together with the input phone number when a call is originated.

6. The mobile communication terminal as claimed in claim 5, wherein the international call identification number includes an international dialing code and a country code.

7. The mobile communication terminal as claimed in one of claims 1 to 6, wherein the call origination request is achieved through user input of a key for call connection after the user manually inputs a phone number of a call terminating side.

8. The mobile communication terminal as claimed in one of claims 1 to 7, wherein the call origination request is achieved through pressing by the user of a short-cut key during a predetermined period of time, the short-cut key being stored corresponding to information regarding a call terminating side with which the user intends to communicate.

9. A method for automatically originating an international call in a mobile communication terminal, the method comprising the steps of:
when position of the mobile communication terminal changes, receiving information regarding the position and detecting information regarding a current position of the mobile communication terminal;
extracting a previously stored code for a corresponding country according to the detected information;
inputting a phone number of a call terminating side when call origination is requested; and
performing call connection by adding the extracted code to the phone number of the call terminating side.

10. The method as claimed in claim 9, further comprising the steps of:
inputting the phone number of the call terminating side from a user when a phone directory is registered; and
storing a country code assigned to each country.

11. The method as claimed in claim 10, wherein the step of inputting the phone number of the call terminating side from a user when a phone directory is registered comprises:
receiving a phone number of the call terminating side including an area code from the user in phone directory registration; and
receiving a country code for each phone number of each call terminating side from the user.

12. The method as claimed in one of claims 9 to 11, further comprising the steps of:
extracting a country code stored corresponding to the phone number of the call terminating side; and
performing call connection by adding the extracted country code and an international dialing code corresponding to the extracted country code to the phone number.

13. The method as claimed in one of claims 9 to 12, wherein the step of detecting the information regarding the current position of the mobile communication terminal comprises determining if the position change of the mobile communication terminal occurs according to movement of the mobile communication terminal between countries.
